# EUROPEAN PATENT APPLICATION

(11) **EP 0 684 159 A1**
(43) Date of publication of application: **29.11.1995**
(21) Application number: 95303662.1
(22) Date of filing: 30.05.1995
(51) Int. Cl.: B60R 13/08, F02B 77/13

(54) **Acoustic undertray**

(30) Priority: 27.05.1994 GB 9410638
(71) Applicant: PERSTORP COMPONENTS LIMITED, St. Neots, Cambs. PE19 2ER (GB)
(72) Inventor: Beck, Raymond Paul, Radlett, Herts, WD7 7HN (GB); Tompson, Graham, Alconbury, Cambs, PE17 5ER (GB); Scutt, Barry Charles, St. Neots, Cambs, PE19 4XJ (GB)
(74) Representative: Barlow, Roy James

(57) **Abstract**

An acoustic undertray for attachment to the underside of a vehicle, the undertray comprising at least one semi-flexible structural core (2) embedded in foam. Mounting plates (8) may be provided for attachment to the vehicle.

## Description

The present invention relates to an acoustic undertray and more particularly to an encapsulated acoustic undertray for use under the engine of a car or other vehicle. It is intended to dampen noise emitted to the exterior of the vehicle and, at the same time, to give a measure of underbody protection.

Existing acoustic undertrays for use in automotive applications are based on a rigid shell of glass fibre reinforced, or glass microsphere filled, polypropylene or polyurethane. This shell is both rigid and hard in order to resist collisions with objects such as stone chips. In a first process the shell is moulded, in the particular shape desired. Then in a separate process it is lined with a foam. This foam is either moulded into the shell or loose laid into the shell and mechanically fixed onto it. This foam can be encapsulated by a protective film or an integral skin in order to seal it and to provide resistance to corroding liquids. The assembly provides a degree of acoustic insulation.

The nature of these reinforced polyurethane and polypropylene shells is such that the moulding processes used to form them requires steel tooling. Steel is used as it is a durable material which suffers less from the abrasion caused by the glass fibres or microspheres used to make the shells and thus, under the pressure used in the moulding process leaks less after repeated use. A further advantage is that it gives a good finish to the moulded shells, which is important when they form an external surface, even though it is for the underside of a vehicle.

The disadvantage of using steel tooling is that it requires high capital costs. Further, as different models and different types of vehicles require different sized and shaped undertrays a number of different moulds are required. The combined effect of this is that undertrays become expensive and almost uneconomical to produce.

It is an aim of the present invention to overcome this disadvantage, and others inherent in the prior art, and to provide undertrays at a low cost even when they are being made for many different types of vehicle.

According to the present invention there is provided an acoustic undertray for attachment to the underside of a vehicle, comprising at least one semi-flexible structural core embedded in foam.

The present invention further provides a method of forming an acoustic undertray for attachment to the underside of a vehicle, comprising the step of embedding at least one semi-flexible structural core in foam.

In either or both cases the undertray may have a protective film applied to either or both of its upper and lower surfaces. Such a film may be applied as the foam is moulded or laminated on, or afterwards, or it may be in the form of a skin forming on the surface of the foam as the foam sets.

The undertray may be produced with attachment mountings for attaching it to the underside of a vehicle.

The inventors of the present invention have recognised that the underside of the tray can afford to be softer than was previously thought necessary. They have determined that the undertray does not need to be rigid to resist the expected collisions and perform its function. Instead it can be deformable but with sufficient elasticity to return to its previous shape after most deformations. Thus the core is semi-flexible in that it is deformable, but maintains its shape when not subject to external forces. It can be preformed to a required shape before embedding it in foam or the undertray itself can be deformed for attachment to a vehicle. With this type of core the undertray will deform and not necessarily shatter or break if struck suddenly.

The semi-flexible cores do not require the steel tooling required by conventional undertrays. They can be obtained "off the shelf" and can reduce costs considerably. Potentially the only process which the undertray manufacturer therefore needs to use is the process of embedding the core in foam. Skinning of the foam can be done within the same tool, and possibly the same process.

The present invention is further described in the accompanying description, merely by way of non-limitative example, with reference to the accompanying drawings in which:-
Fig. 1 is a perspective view of an undertray according to the present invention; and
Fig. 2 is a sectional view of the undertray in the plane denoted by the line AA of Fig. 1.

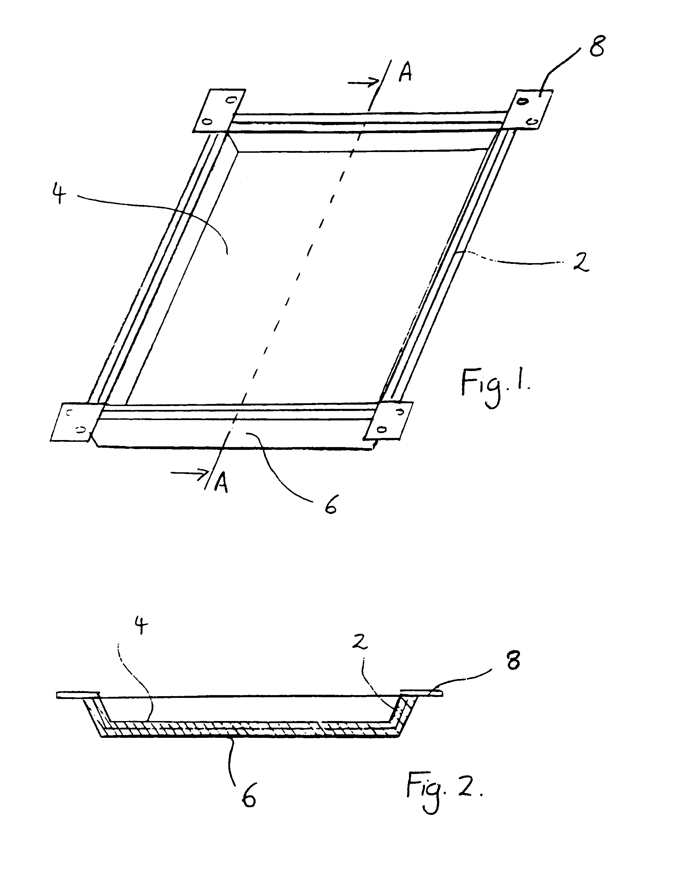

Figure 1 shows an embodiment of the present invention including a structural core 2 embedded within a foam, having an internal surface 4 within the tray and an external surface 6 outside the tray. A plurality of brackets or mounting plates 8, by which the tray can be attached to the underside of a vehicle, is also shown. These are preferably attached to the core. The undertray is self supporting.

As can be seen from Figure 2 the structural core 2 is totally embedded within the foam, although undertrays may be produced where this is not so on some areas on top and/or underneath.

The core itself may typically be made of a steel mesh, expanded metal, or perforated metal sheeting. Other possible materials include fibre board material, high density structural foam, glass fibre or even polymeric materials such as polyethylene, polypropylene or nylon. Certain of these may have disadvantages, for example using glass fibre can be labour intensive. The core is semi-flexible; stiffening ribs may be pressed or moulded into the core to control the stiffness. Before the core is embedded in foam it may either be in a flat form or pre-formed to a required shape.

One process of making the undertray comprises placing the core sheet or pre-formed core into an aluminium or resin mould and fully embedding it in foam. If the core is already provided with mountings by which it may be attached to the underside of a vehicle it is preferable to ensure that these mountings are not hindered or covered by the foam.

Another process, suited for low volume production of parts, involves laminating the core with sheet foam by hand or otherwise.

The foam which is used may be almost any filled or unfilled elastomer. It is typically from 5 - 50mm thick and preferably from 20 - 40mm thick. The preferred foam is polyurethane or polyurethane based. The preferred density range of the foam is from 40 - 100 kg/m³, or even 50 - 80 kg/m³. The preferred moulding process is reaction injection moulding. For polyurethane reaction injection moulding this may involve the blending of polyol and isocyanate streams in a mixing head and squirting this into the mould. Typical mould temperatures are from 40 _{°} C to 50 _{°} C.

The foam may either be self-skinning or, alternatively, covered on the internal and external surfaces 4,6 with a protective film. In the latter case the protective film may be applied either as a pre- injection or extrusion into the mould, or in the mould, with or without vacuum forming, or subsequent to the moulding process. If the foam is to be covered within the mould then a nylon film or mesh may be inserted into the mould to define the exterior face of the tray. This film alternatively may be of polyurethane. A polyurethane film may also be applied to the interior of the tray. These protective films provide proofing against petrol, oil water spillage or puncture, and at the same time maintain acoustic absorption and damping properties and, especially on the underside, they also provide waterproofing and resistance to external impact. As an alternative to polyurethane the films may be of nylon film, nylon mesh, dichloropentadiene based reaction injection moulding, polyethylene, polyamide or a similar material and, if required, may be of a laminated or co-extruded construction.

Additionally, the film may be filled with a filler, such as a mineral filler, for example barium sulphate, calcium carbonate and/or china clay (Kaolin). The resulting increased density enhances the capability of the film to provide an acoustic barrier, to make the tray acoustically dead.

The thickness of the film may be in the range of from 20 to 4000 am, with either a constant or varying cross-section. It is preferably in the range of from 50 - 200 /1.m thick for economy of material or from 1500 - 3000 µm thick for improved impact resistance. Different areas could have different thickness according to expected wear and impacts.

The tooling for moulding such trays can be of aluminium or even resin and thus the costs of the tooling and manufacturing costs of the tray are reduced in comparison with the costs of the currently used method requiring steel tooling.

An undertray formed according to the present invention can be deflected and possibly deformed in the event of a collision with, or an impact from, an external object. Its flexibility also makes it convenient for attachment to different vehicles.

Further, undertrays according to the present invention are also self-gasketing. Because of the flexibility of the process to make the undertrays in a desired shape and size, and because of the flexibility of the undertrays themselves, their edges can be brought into direct contact with the surfaces on the undersides of the vehicles to form an effective acoustic seal, without the problem of energy transfer either to or from the undertray.

Other advantages of the invention are that the undertray is lightweight, has high impact absorption and high damage resistance.

Whilst, in the drawings, the undertray is shown as being flat-bottomed with straight sloping sides, it should be understood that it could equally well be curved i.e. like a bowl, it could have a combination of straight portions and curved portions, or it could be of any desired shape. It need not have any axes of symmetry.

Further, it does not need to have, necessarily, a regular cross-section. It may be desirable to make the foam thicker in some places than in others. It could be, for example, that the varying thickness of the foam and/or shape of the core are used to direct all fluids caught in the undertray to one area from which they can be drained out through a small hole.

Whereas the description only mentions undertrays having one core it is within the scope of the invention that two or more core pieces can be used either side by side, on top of each other or in combination. Adjacent core pieces can be in contact or separated by air, foam or any other suitable material.

## Claims

1. An acoustic undertray for attachment to the underside of a vehicle, comprising at least one semi-flexible structural core embedded in foam.

2. An undertray according to claim 1 further comprising stiffening ribs for controlling the stiffness of the core.

3. An undertray according to claims 1 or 2 further comprising a protective film on at least one of the outer surfaces of the foam.

4. A method of forming an acoustic undertray for attachment to the underside of a vehicle, comprising the step of embedding at least one semi-flexible structural core in foam.

5. A method according to claim 4, wherein said embedding step comprises moulding or laminating said foam onto said core.

6. A method according to claims 4 or 5 further comprising the step of pre-forming the core into a required shape before said embedding step.

7. A method according to any one of claims 4 to 6, further comprising the step of applying a protective film on at least one of the outer surfaces of the foam.

8. An undertray or method according to claim 3 or 7, wherein the protective film on an outer surface comprises at least one material from the group containing: nylon film, nylon mesh, polyurethane, dichloropentadiene-based reaction injection moulding, polyethylene, and polyamide.

9. An undertray or method according to any one of the preceding claims, wherein the core is comprised of at least one material from the group containing: steel mesh, expanded metal, perforated metal sheeting, fibre board, high density structural foam, polyethylene, polypropylene and nylon.

10. An undertray or method according to any one of the preceding claims, wherein the embedding foam is a filled or unfilled elastomer, preferably polyurethane.

11. An undertray or method according to any one of the preceding claims wherein the outer surface of the embedding foam is self-skinning.

12. A method of producing an undertray, the undertray being in accordance with any one of claims 1 to 3 and 8 to 11.

13. A vehicle having an undertray according to any one of claims 1 to 3 and 8 to 12 attached thereto.
